# EUROPÄISCHE PATENTSCHRIFT

(11) **EP 0 890 713 B1**
(45) Veröffentlichungstag und Bekanntmachung des Hinweises auf die Patenterteilung: **26.03.2003**
(21) Anmeldenummer: 98110042.3
(22) Anmeldetag: 29.05.1998
(51) Int. Cl.: F01L 1/053, F01L 1/26

(54) **Brennkraftmaschine mit Nockenwellenlagerrahmen**
Internal combustion engine with camshaft bearing frame
Moteur à combustion interne avec cadre de support pour arbre à cames

(30) Priorität: 12.07.1997 DE 19729948
(43) Veröffentlichungstag der Anmeldung: 13.01.1999
(73) Patentinhaber: DEUTZ Aktiengesellschaft, 51063 Köln (DE)
(72) Erfinder: Bauer, Lothar, 51109 Köln (DE); Oswald, Peter, 51491 Overath (DE)

(56) Entgegenhaltungen:
- EP-A- 0 293 278
- EP-A- 0 372 587
- EP-A- 0 461 952
- EP-A- 0 654 589
- DE-A- 4 031 461
- DE-A- 4 323 073
- GB-A- 2 164 703
- US-A- 4 497 289

## Beschreibung

Die Erfindung betrifft eine Brennkraftmaschine mit einem Kurbelgehäuse, in dem eine Kurbelwelle drehbar gelagert ist, an der zumindest ein einen Kolben tragendes Pleuel angelenkt ist, das in einem von einem Zylinderkopf abgedeckten Zylinder bewegbar ist, wobei in dem Zylinderkopf Gaswechselventile angeordnet sind, die von zumindest einer obenliegenden in einem Nockenwellenlagerrahmen drehbar gelagerten Nockenwelle betätigt werden, wobei der Nockenwellenlagerrahmen eine durch die Nockenwellenachse verlaufende Trennebene zu dem Zylinderkopf aufweist.

Eine derartige Brennkraftmaschine ist aus der DE 43 23 073 A1 bekannt. Der hier dargestellte Nockenwellenlagerrahmen weist eine Trennebene zu dem Zylinderkopf auf, in die Ausnehmungen zur Lagerung von Nockenwellen eingelassen sind. Diese Nockenwellen betätigen die Gaswechselventile über Schlepphebel. Mittig in dem Nockenwellenlagerrahmen, der gleichzeitig auch der Lagerdeckel ist, sind Halterungen für ein eine Zündkerze oder ein Einspritzventil aufnehmendes Rohr vorgesehen. Dieses Rohr ist gegenüber den ölführenden oder kühlflüssigkeitsführenden Bereichen des Zylinderkopfs und des Nockenwellenlagerrahmens abzudichten.

Aus der weiterhin bekannten GB 2164703 A ist ein Verfahren zum Montieren einer Brennkraftmaschine bekannt, bei dem die Zylinderkopfschrauben gelöst werden können, ohne die Nockenwellen aus dem Zylinderkopf auszubauen. Es ist allerdings kein Nockenwellenlagerrahmen vorgesehen, sondern die Nockenwellen werden über übliche Lagerdeckel im Zylinderkopf gelagert.

Der Erfindung liegt die Aufgabe zugrunde, einen Nockenwellenlagerrahmen bereitzustellen, der insbesondere bezüglich seiner Fertigung und Montage optimiert ist.

Diese Aufgabe wird dadurch gelöst, dass der Nockenwellenlagerrahmen und dementsprechend auch der Zylinderkopf eine Ausnehmung zur Aufnahme eines Einspritzventils oder eines Injektors bei dem Einsatz eines Common-Rail-Systems je Zylinder aufweist. Hierbei ist weiterhin vorgesehen, dass die Ausnehmung in Verlängerung der Zylindermittelachse in den Nockenwellenlagerrahmen eingelassen ist und dass die Ausnehmung von in dem Nockenwellenlagerrahmen und dem Zylinderkopf angeordneten Schmierölräumen und Kühlmittelräumen getrennt ist. Durch diese Ausnehmung ragt das Einspritzventil bis in den zwischen dem Kolben und dem Zylinderkopf gebildeten Brennraum der Brennkraftmaschine. Selbstverständlich kann die Brennkraftmaschine aber auch eine direkteinspritzende fremdgezündete Brennkraftmaschine, beispielsweise ein Gasmotor oder aber auch ein Ottomotor sein. Besonders vorteilhaft ist die vollständige Trennung der Ausnehmung von den in dem Zylinderkopf bzw. in dem Nockenwellenlagerrahmen angeordneten Schmierölräumen und Kühlmittelräumen. Hierdurch ist auch bei Leckagen an dem Einspritzventil oder dem zugeordneten Hochdruckanschluss ein Vermischen von Kraftstoff und Schmieröl ausgeschlossen.

Vorzugsweise wird der Zylinderkopf und der Nockenwellenlagerrahmen mit den zugehörigen Bauteilen gemäß dem unabhängigen Verfahrensanspruch in der Form montiert, dass
I. der Zylinderkopf vormontiert wird (Gaswechselventile usw.),
II. die Nockenwellen in die Nockenwellenlagerstellen des Zylinderkopfs eingesetzt werden,
III. der Nockenwellenlagerrahmen auf den Zylinderkopf aufgesetzt wird und mit den Nockenwellenlagerrahmen-Befestigungsschrauben auf dem Zylinderkopf festgeschraubt wird und
IV. der Zylinderkopf mit montiertem Nockenwellenlagerrahmen sowie ggf. montierten Einspritzventilen und Glühstiften auf das Kurbelgehäuse aufgesetzt und mit Zylinderkopfschrauben befestigt wird.

Der gesamte Zylinderkopf mit dem Nockenwellenlagerrahmen ist also in der weitestgehenden Version komplett montierbar und auf das Kurbelgehäuse aufsetzbar. Andererseits ist der Nockenwellenlagerrahmen aber auch beispielsweise zu Reparaturzwecken alleine demontierbar.

Alternativ ist es aber auch möglich die Nockenwellen beispielsweise mit Lagerbrücken an entsprechend ausgestalteten Lagerstühlen in dem Nockenwellenlagerrahmen zu befestigen. Die so vormontierte Baueinheit wird dann komplett auf den Zylinderkopf aufgesetzt und dieser auf das Kurbelgehäuse montiert.

In Weiterbildung der Erfindung ist in dem Nockenwellenlagerrahmen und den Zylinderkopf eine Zweitausnehmung für einen Glühstift je Zylinder eingelassen. Dabei ist es vorteilhaft, wenn, wie in weiterer Ausgestaltung vorgesehen ist, die Ausnehmung und die Zweitausnehmung nebeneinanderliegend angeordnet sind und diese darüber hinaus in einen gemeinsamen oberen Montageraum in dem Nockenwellenlagerrahmen übergehen. Dabei erstreckt sich dann in weiterer Ausgestaltung der Montageraum über die Zylinderreihe der Brennkraftmaschine im Nockenwellenlagerrahmen. Damit ist also bei beispielsweise einer vier- oder mehrzylindrigen Brennkraftmaschine zunächst einmal eine geordnete Anordnung der Einspritzventile und der Glühstifte entlang der Zylinderreihe erreicht. Gleichzeitig wird dadurch eine übersichtliche Montageanordnung gewährleistet, was zur Montagesicherheit beiträgt.

In Weiterbildung der Erfindung ist vorgesehen, daß in den Montageraum je zugeordneten Zylinder eine Öffnung in Höhe des Einspritzventilhochdruck-Anschlusses einmündet, die sich zu einer Seitenwand des Nockenwellenlagerrahmens erstreckt. Diese Öffnung ist selbstverständlich auch wieder vollkommen getrennt von den zuvor genannten und erläuterten Schmierölräumen in dem Nockenwellenlagerrahmen und Kühlmittelräumen in dem Zylinderkopf. Durch diese Öffnung, die vorteilhaft beim Gießen ausgespart wird, können dann die Einspritzleitung und ggf. das Anschlußkabel zu einem zugeordneten Glühstift durchgeführt werden, die dann in dem Montageraum mit den zugeordneten Bauteilen verschraubt werden. Insbesondere mit dem noch später erläuterten Montageraumverschlußdeckel, der oberhalb des Montageraumes angebracht wird, ergibt sich somit ein im wesentlichen bis auf ggf. eingelassene Schriftzüge glattflächiges Bild der Brennkraftmaschine auf der Zylinderkopfseite. Sind hier die Anforderungen nicht so hoch, können die Einspritzleitung selbstverständlich ebenso wie die Anschlußleitungen für die Glühstifte und andere elektrische Kabel (z. B. bei Common-Rail) nach oben aus dem Montageraum herausgeführt werden.

In Weiterbildung der Erfindung weisen die Ausnehmung und/oder die Zweitausnehmung eine seitliche Entsorgungsöffnung auf. Diese Entsorgungsöffnung ist vorteilhaft an geodätisch tiefer Stelle insbesondere der Zweitausnehmung im Zylinderkopf angeordnet. Durch diese Entsorgungsöffnung kann beispielsweise in den Montageraum bzw. die Ausnehmung oder die Zweitausnehmung eingedrungenes Wasser (beispielsweise bei einem Reinigungsvorgang) abgeführt werden, so daß die zuvor genannten Räume im Betrieb der Brennkraftmaschine immer "trocken" bleiben. Diese ebenfalls jedem Zylinder zugeordnete Entsorgungsbohrung kann gebohrt sein.

In Weiterbildung der Erfindung bildet der Nockenwellenlagerrahmen die Abdeckung einer Luftansaugleitung. Dabei ist die Luftansaugleitung vorteilhaft in dem unteren Teil durch den Zylinderkopf gebildet und in dem geschilderten oberen Bereich durch den Nockenwellenlagerrahmen. Dadurch wird auch für dieses Funktionsteil der Herstellungs- und Montageaufwand minimiert.

In Weiterbildung der Erfindung ist in den Nockenwellenlagerrahmen ein Beruhigungsraum für Blow-By-Gase integriert. In diesem Beruhigungsraum werden die Ölbestandteile des Blow-By-Gases weitgehend ausgeschieden und dem Ölkreislauf der Brennkraftmaschine wieder zugeführt.

In Weiterbildung der Erfindung ist stirnseitig an den Nockenwellenlagerrahmen ein Zahnräderraum angeformt, in dem die Nockenwellenzahnräder der Nockenwelle angeordnet sind. Dabei ist es so, daß die beiden Nockenwellen einerseits von einem Zahnriementrieb angetrieben werden, wobei dieser Zahnriementrieb mit einem auf einer ersten Nockenwelle außerhalb des Zahnräderraums angeordneten Zahnriemenrad zusammenwirkt. Der Zahnriemen wird von einer Zwischenwelle (Einspritzpumpenwelle) angetrieben, die wiederum von der Kurbelwelle angetrieben ist, wobei eine Spannrolle für den Zahnriemen an dem Zylinderkopf befestigt ist. Axial neben dem Zahnriemenrad sind die beiden Nockenwellenzahnräder vorgesehen, die miteinander kämmen, so daß die erste angetriebene Nockenwelle somit die zweite Nockenwelle antreibt. Das Nockenwellenzahnrad der zweiten Nockenwelle bildet dann den erfindungsgemäßen Antrieb der Vakuumpumpe. Vorgesehen kann auch sein, daß die Nockenwellenzahnräder eine Zahnradpumpe beispielsweise für Schmieröl bilden.

In weiterer Ausgestaltung der Erfindung weist der Nockenwellenlagerrahmen eine integrierte Deckelplatte auf, die von dem Montageraum durchbrochen ist und die Öffnungen für Zylinderkopfschrauben und für Nockenwellenlagerrahmen-Befestigungsschrauben aufweist. Dieser "geschlossene" Nockenwellenlagerrahmen bietet den Vorteil großer Steifheit. Andererseits müssen Öffnungen für die Zylinderkopfschrauben und für die Nockenwellenlagerrahmen-Befestigungsschrauben vorgesehen sein, die dann durch entsprechende Verschlußkappen wieder verschlossen werden können.

In alternativer Ausgestaltung ist vorgesehen, daß der Nockenwellenlagerrahmen von einem separaten Deckel abdeckbar ist, wobei der Deckel im Bereich des Montageraums durchbrochen ist. Diese Ausführung erfordert einen separaten Deckel zur Abdeckung insbesondere des Ölraums in dem Nockenwellenlagerrahmen, wobei aber durch diese Öffnung der Zugang zu den genannten Zylinderkopfschrauben und Nockenwellenlagerrahmen-Befestigungsschrauben in einfacher Art und Weise gegeben ist, im Gegensatz zu bekannten Ventildeckel kann dieser Deckel als im wesentlichen glattflächiges Bauteil ausgebildet sein, was insofern den Herstellungsaufwand und Befestigungsaufwand reduziert.

In Weiterbildung ist die Deckelplatte bzw. der Deckel im Bereich des Durchbruchs für den Montageraum von einem Montageraumverschlußdeckel abdeckbar. Dieser Montageraumverschlußdeckel kann als einfaches Plastikteil ausgeführt sein, da an diesen keine besonderen Ansprüche bezüglich Dichtheit gestellt werden.

In weiterer Ausgestaltung der Erfindung weisen die Nockenwellen im Schaftbereich Abflachungen auf, wobei die Nockenwellen zu Einführungen der Zylinderkopfschrauben und/oder des entsprechenden Schraubwerkzeuges in eine Montagestellung verdrehbar sind. Der Schaftbereich ist in diesem Zusammenhang der Bereich der Nockenwelle, in dem keine Lagerstellen und Nocken vorgesehen sind. Hierbei ist es so, daß die Gaswechselventile unter einem geringen V-Winkel in dem Zylinderkopf angeordnet sind, um insbesondere ausreichend Platz für den Ein- und Ausbau der Einspritzventile und Glühstifte im Bereich des Montageraums, der ja von den danebenliegenden Nockenwellenräumen getrennt ist, zu erhalten. Dabei sind die Nockenwellen bis in den Bereich des Zugangs zu den Zylinderkopfschrauben nach außen verlegt worden und die Nockenwellen mit den genannten Abflachungen versehen worden.

In weiterer Ausgestaltung weist der Nockenwellenlagerrahmen zylinderkopfseitig Dichtnutbereiche auf, in die Gummiformdichtungen und/oder Runddichtringe einsetzbar sind. Dies hat gegenüber flüssigen Dichtungen den Vorteil, daß der Nockenwellenrahmen bei Wartungs- oder Reparaturarbeiten auch unter schwierigen Randbedingungen abgenommen werden kann und unter Verwendung der vorhandenen Gummiformdichtungen/Runddichtringe wieder montiert werden kann.

In Weiterbildung der Erfindung weist der Nockenwellenlagerrahmen endseitig zwischen den Zylindern Nockenwellenlagerstellen für jede Nockenwelle auf. Dies garantiert auch im Zusammenhang mit den Abflachungen im Schaftbereich der Nockenwellen eine hohe Steifheit des Gesamtsystems und damit eine weitere Reduzierung der Geräuschemissionen.

In Weiterbildung der Erfindung sind in dem Zahnräderraum des Nokkenwellenlagerrahmens axiale Lagerflächen vorgesehen, an die die Nockenwellenzahnräder anliegen. Diese Ausbildung gewährleistet mit einfachen Mitteln eine kostengünstig realisierbare Axialführung der Nockenwellen.

In weiterer Ausgestaltung weist der Nockenwellenlagerrahmen gegossene Tassenstößelüberprüfungsöffnungen auf, so daß diese jederzeit ohne aufwendige Demontagen überprüft werden können. Dabei ist in weiterer Ausgestaltung der Nockenwellenlagerrahmen so ausgebildet, daß er insbesondere aus Leichtmetall druckgießbar ist.

Weiterhin weist der Nockenwellenlagerrahmen Anschraubsättel für ein Common-Rail auf, das wahlweise anstelle einer konventionellen Einspritzpumpe verwendet werden kann.

Schließlich ist noch allgemein zu vermerken, daß der Nockenwellenlagerrahmen bei Ausbildung der Brennkraftmaschine als vierzylindrige Brennkraftmaschine über für jede Nockenwelle sechs Nokkenwellenlagerstellen verfügt, die im Bereich des Einspritzventils quer zur Motorlängsachse angeordnet sind. Weiterhin weist der Nokkenwellenlagerrahmen stirnseitig diagonal gegenüberliegend angeordnete angegossene oder angeschraubte Transportösen auf. Schließlich ist es so, daß der Nockenwellenlagerrahmen zur weiteren Verringerung der Geräuschemissionen mit insbesondere innenliegenden Verrippungen versehen ist. Zudem übernimmt der Nockenwellenlagerrahmen weitere Zusatzfunktionen und Hilfsfunktionen, die nachfolgend stichpunktartig aufgeführt sind:
- in den Nockenwellenlagerrahmen ist eine Kühlmittelsammelleitung eingelassen,
- in dem Nockenwellenlagerrahmen ist eine Schmieröleinfüllvorrichtung vorgesehen,
- die Ableitung der Blow-By-Gase vom Ölabscheider zur Verdichterseite des Abgasturboladers erfolgt über eine Querbohrung, die in den Nockenwellenlagerrahmen eingelassen ist,
- die Wasserführung vom Abgaskühler zum Zylinderkopf ist in den Nockenwellenlagerrahmen eingelassen,
- der Nockenwellenlagerrahmen übernimmt eine Tragfunktion für einen zu montierenden Ölabscheider und
- der Nockenwellenlagerrahmen hat angegossene Halterungen für zu verlegende Kraftstoffniederdruckleitungen und elektrische Kabel.

Zu dem Zylinderkopf ist - wie schon teilweise zuvor gesagt - zu bemerken, daß die Schäfte der Einlaßventile und der Auslaßventile geneigt in dem Zylinderkopf angeordnet sind. Dadurch wird insbesondere im Bereich zwischen den Nockenwellen so viel Platz gewonnen, daß in diesem Bereich eine von schmierölführenden und/oder kühlmittelführenden Räumen getrennte Ausnehmung für das Einspritzventil darstellbar ist. Die Aufteilung in einen Zylinderkopf und einen Nokkenwellenlagerrahmen ist aus mehreren Gründen sinnvoll. Zunächst einmal wird durch die Aufteilung die Gießform des Zylinderkopfs und des Nockenwellenlagerrahmens einfacher als eine gemeinsame Gießform. Zudem können der Zylinderkopf und der Nockenwellenlagerrahmen aus unterschiedlichen Materialien hergestellt sein, wobei der Zylinderkopf insbesondere aus Grauguß oder einer höherwertigen Leichtmetallegierung und der Nockenwellenlagerrahmen aus Standardleichtmetallegierung gießbar sind. Dadurch ergeben sich Gewichtsvorteile. Die Einlaßkanäle weisen eine zur Trennebene im stumpfen Winkel ausgebildete gemeinsame Mündungsfläche auf, an die eine Luftansaugleitung anschließbar ist. Dadurch können die Gießkerne der Einlaßkanäle einfach in der Gießform fixiert werden und die Gießkerne nach dem Gießvorgang problemlos vollständig entfernt werden. Die Einlaßkanäle eines Zylinders sind als ein Drallkanal und ein Tangentialkanal ausgebildet, während die beiden Auslaßkanäle eines Zylinders zu einem Hosenkanal zusammengefaßt sind und im rechten Winkel zur Trennebene in der Zylinderkopflängsseitenwand münden. Diese Ausbildung ermöglicht eine klare Trennung der Einlaßkanäle und Auslaßkanäle, wobei insbesondere die thermisch hochbelasteten Auslaßkanäle auf kurzem Wege von dem Brennraum zu der Zylinderkopflängsseitenwand geführt sind.

Die folgende Zeichnungsbeschreibung erläutert weitere vorteilhafte Ausgestaltungen der Erfindung, die in den Zeichnungen dargestellt sind.

Es zeigen:
- Fig. 1:: einen mittigen Längsschnitt durch Zylinderkopf und Nokkenwellenlagerrahmen mit separatem Deckel,
- Fig. 2a:: einen Querschnitt durch Zylinderkopf und Nockenwellenlagerrahmen mit integrierter Deckelplatte,
- Fig. 2b:: einen weiteren Querschnitt durch Zylinderkopf und Nokkenwellenlagerrahmen mit integrierter Deckelplatte,
- Fig. 3:: einen Querschnitt durch einen Zylinderkopf und einen Nockenwellenlagerrahmen mit separatem Deckel und alternativen Leitungsführungen für die Einspritzleitungen,
- Fig. 4:: einen mittigen Längsschnitt durch den Nockenwellenlagerrahmen mit aufgesetztem Deckel und Montageraumverschlußdeckel,
- Fig. 5:: eine Draufsicht auf den Nockenwellenlagerrahmen von Fig. 4 und
- Fig. 6:: einen Querschnitt durch den Zylinderkopf und den Nokkenwellenlagerrahmen mit integrierter Deckelplatte und separater Abdeckung der Luftansaugleitung.

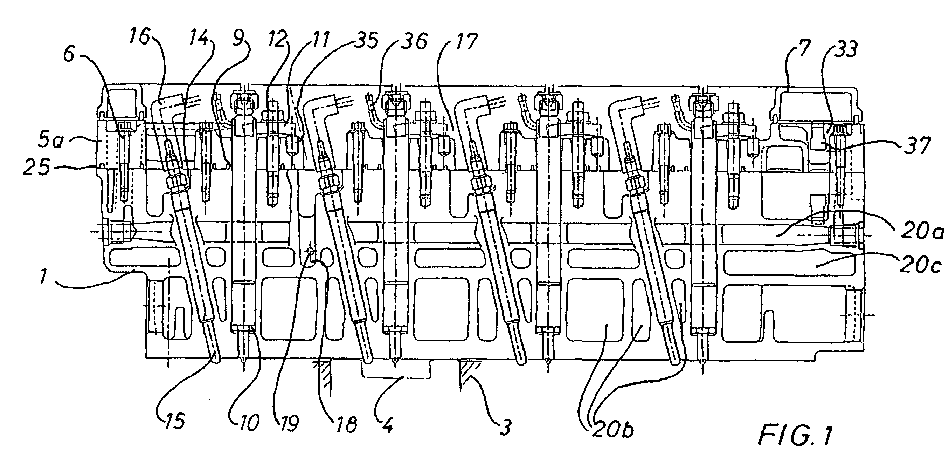

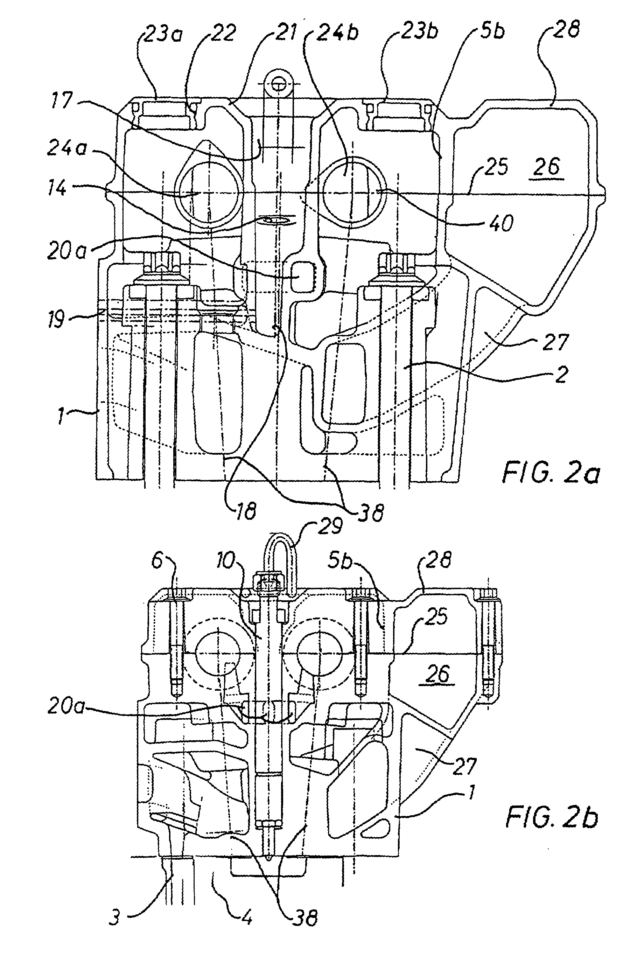

Der in Fig. 1 teilweise dargestellte Zylinderkopf 1 ist ein Vierventil-Zylinderkopf für eine insbesondere vierzylindrige selbstzündende Brennkraftmaschine. Der Zylinderkopf 1 ist mit Zylinderkopfschrauben 2 (Fig. 2) auf dem Kurbelgehäuse einer Brennkraftmaschine verschraubt, wobei in Fig. 1 ein Zylinder 3 und ein Kolben 4 angedeutet sind.

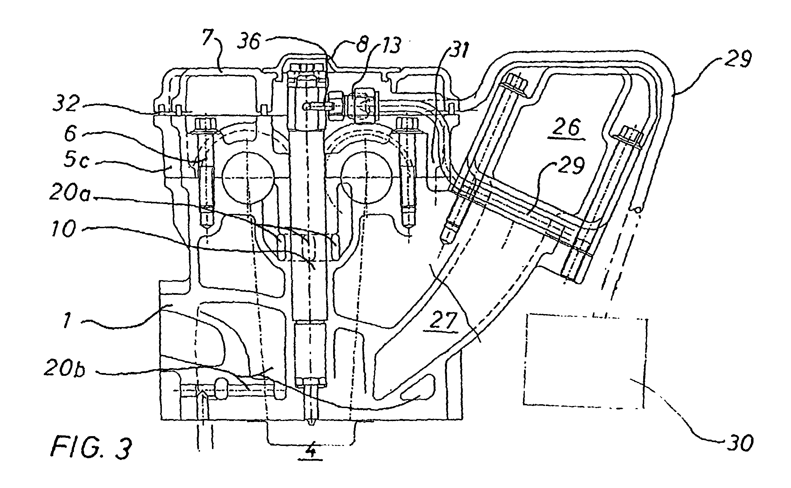

Der Zylinderkopf 1 ist abgedeckt von einem Nockenwellenlagerrahmen 5a, der mit Nockenwellenlagerrahmen-Befestigungsschrauben 6 auf dem Zylinderkopf 1 festgeschraubt ist. Auf den Nockenwellenlagerrahmen 5a ist ein separater Deckel 7 aufgesetzt, der wiederum von einem Montageraumverschlußdeckel 8 (Fig. 3) abgedeckt ist. In den Nockenwellenlagerrahmen 5a ist je Zylinder eine Ausnehmung 9 eingelassen, die sich durch den Zylinderkopf 1 bis in den in den Kolben 4 eingelassenen Brennraum fortsetzt. In dieser Ausnehmung 9 ist ein Einspritzventil 10 eingesetzt, das mit einer Befestigungspratze 11 mit einer Einspritzventil-Befestigungsschraube 12 auf einem Stützelement 35 befestigt ist. Das Einspritzventil 10 weist einen obenliegenden oder seitlichen Einspritzventil-Hochdruckleitungsanschluß 13 (Fig. 3) und einen Leckölleitungsanschluß 36 auf. Die Ausnehmung 9 ist senkrecht in der Mittelebene des Zylinderkopfs 1 und des Nokkenwellenlagerrahmen 5a angeordnet und genau oder ggf. mit einem geringen seitlichen Versatz in Verlängerung der Mittelachse des zugehörigen Zylinders ausgerichtet. Neben der Ausnehmung 9 ist ebenfalls in der Mittelebene durch den Zylinderkopf 1 und den Nokkenwellenlagerrahmen 5a eine Zweitausnehmung 14 angeordnet, die sich schräg zu der Ausnehmung 9 ebenfalls bis in den Brennraum des Kolbens 4 erstreckt. In diese Zweitausnehmung 14 ist ein Glühstift 15 eingeschraubt oder eingesetzt, der über einen Kabelanschluß 16 mit dem elektrischen System der Brennkraftmaschine verschaltet ist.

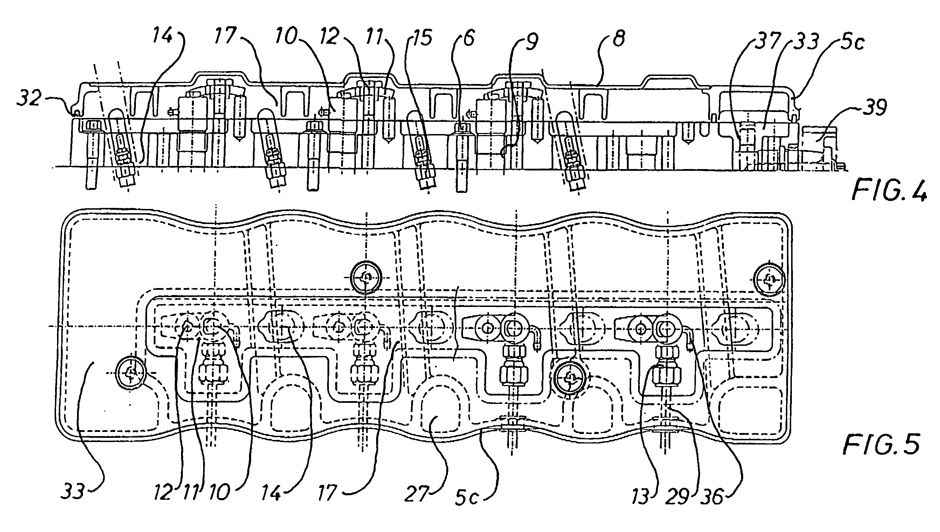

Die Ausnehmung 9 und die Zweitausnehmung 14 gehen in dem Nokkenwellenlagerrahmen 5a in einen Montageraum 17 über, der sich über nahezu die gesamte Länge des Nockenwellenlagerrahmens (Fig. 4 und Fig. 5) erstreckt. Neben der Zweitausnehmung 14 ist eine Vertiefung 18 in den Zylinderkopf eingelassen, von der eine seitliche Entsorgungsöffnung 19 zu einer Zylinderkopflängsseitenwand abgeht. Die Mündungen der Entsorgungsöffnungen 19 einer Zylinderreihe können über eine seitliche Sammelleitung miteinander (und mit einem Auffangbehälter) verbunden sein. In den Zylinderkopf 1 sind weiterhin übliche Kühlmittelräume 20b eingelassen, die von Kühlwasser durchströmt werden. Weiterhin weist der Zylinderkopf 1 eine gegossene entlang etwa der Mitte des Zylinderkopfs 1 unter seitlicher Umgehung der Ausnehmungen 9 und der Zweitausnehmungen 14 verlaufende Ölgalerie 20a auf, durch die Schmieröl zu den Schmierstellen und den Hydrostößeln geführt wird. Darunter liegen drucklose Ölräume 20c.

Im wesentlichen Unterschied zur Fig. 1 ist in den Fig. 2a und 2b der Nockenwellenlagerrahmen 5b mit einer integrierten Deckelplatte 21 ausgestattet. Dementsprechend sind in Verlängerung der Zylinderkopfschrauben 2 und neben den Nockenwellenlagerrahmen-Befestigungsschrauben 6 Öffnungen 22 vorgesehen, die durch Verschlußkappen 23a, 23b verschließbar sind. Dabei sind die Verschlußkappen 23a und 23b unterschiedlich ausbildbar. Die Brennkraftmaschine weist zwei obenliegende Nockenwellen 24a, 24b auf, deren Mittelachse durch die Trennebene 25 zwischen Zylinderkopf 1 und Nokkenwellenlagerrahmen 5b verläuft. Weiterhin ist im rechten Teil der Fig. 2 die Luftansaugleitung dargestellt, die ebenfalls von der Trennebene 25 in einen unteren und einen oberen Teil aufgeteilt ist. Die Luftansaugleitung, die auch eine Ladeluftleitung sein kann, ist über Einlaßkanäle 27 mit den Einlaßventilen eines Zylinders verbunden. Weiterhin ist die durch die Trennebene 25 von der Luftansaugleitung 26 getrennte Abdeckung 28 einstückig mit dem Nockenwellenlagerrahmen 5b ausgebildet. Im übrigen sind in Fig. 2a Abflachungen 40 an den Nockenwellen 24a, 24b dargestellt, die jeweils in der Montageposition für die Zylinderkopfschrauben 2 stehen.

In Fig. 3 ist wiederum der Nockenwellenlagerrahmen 5c mit separatem Deckel 7 dargestellt, wobei in dieser Figur insbesondere zwei unterschiedliche Verlegemöglichkeiten der Einspritzleitung 29 dargestellt sind. Die Einspritzleitung 29 ist dabei in beiden Varianten an dem seitlichen Einspritzventil-Hochdruckleitungsanschluß 13 festgeschraubt und zu der Einspritzpumpe 30, die als Hochdruck-Verteilereinspritzpumpe ausgebildet ist, geführt. Alternativ ist auch der Einsatz eines Common-Rail-Systems vorgesehen. In der ersten Variante ist die Einspritzleitung 29 durch eine Öffnung 31 geführt, die sich durch den Nockenwellenlagerrahmen 5c und ggf. den Zylinderkopf 1 auf eine Seitenwand des Zylinderkopfs 1 erstreckt. In der zweiten Variante ist die Einspritzleitung 29 außen um die Luftansaugleitung 26 herum zu der Einspritzpumpe 30 geführt. Festzuhalten ist im übrigen zu dem Deckel 7, daß dieser über Dichtleisten 32 dicht und akustisch abgekoppelt auf dem Nockenwellenlagerrahmen 5a befestigt ist und insbesondere auch zu dem mittigen Montageraum 17 abgedichtet ist. Der Montageraumverschlußdeckel 8 ist als Plastikteil ausgebildet und einfach (wie auch den Fig. 4 und 5 zu entnehmen ist) aufgeklippst.

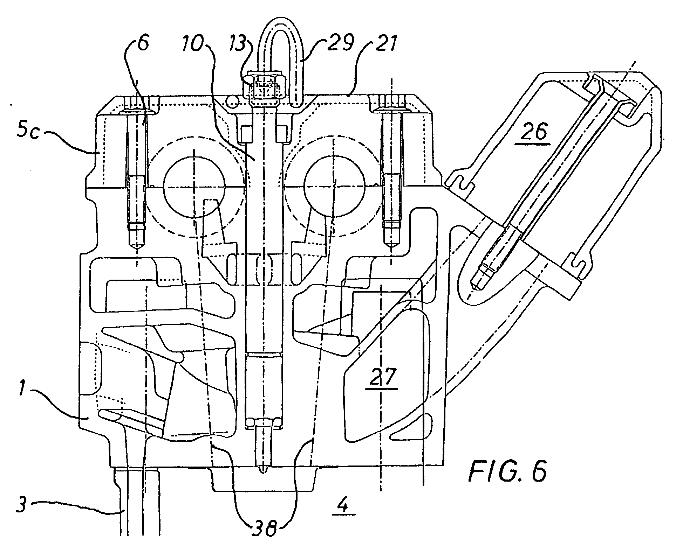

In Fig. 6 ist ein Nockenwellenlagerrahmen 5c dargestellt, der wiederum eine integrierte Deckelplatte 21 aufweist. In dieser Variante sind die Nockenwellenlagerrahmen-Befestigungsschrauben 6 bis zu der Deckelplatte 21 geführt und gegenüber dieser abgedichtet. Die Einspritzleitung 29 ist in dieser Variante koaxial an dem Einspritzventil 10 festgeschraubt.

In den Fig. 4 und 5 ist weiterhin ein Zahnräderraum 33 dargestellt, der an den Nockenwellenlagerrahmen 5a angeformt ist. In dem Zahnräderraum 33 kämmen die Nockenwellenzahnräder 37 der Nockenwellen 24a, 24b miteinander. Angetrieben wird die erste Nockenwelle 24 von einem Zahnriemenrad 39.

## Patentansprüche

1. Brennkraftmaschine mit einem Kurbelgehäuse, in dem eine Kurbelwelle drehbar gelagert ist, an der zumindest ein einen Kolben tragendes Pleuel angelenkt ist, das in einem von einem Zylinderkopf abgedeckten Zylinder bewegbar ist, wobei in dem Zylinderkopf Gaswechselventile angeordnet sind, die von zumindest einer obenliegenden im Bereich eines Nockenwellenlagerrahmens drehbar gelagerten Nockenwelle betätigt werden, wobei der Nockenwellenlagerrahmen eine durch die Nockenwellenachse verlaufende Trennebene zu dem Zylinderkopf aufweist,
**dadurch gekennzeichnet, dass** der Nockenwellenlagerrahmen (5a, 5b, 5c) eine Ausnehmung (9) zur Aufnahme eines Einspritzventils (10) oder eines Injektors je Zylinder aufweist, und daß die Ausnehmung (9) in Verlängerung der Zylindermittelachse in den Zylinderkopf (1) und in den Nockenwellenlagerrahmen (5a, 5b, 5c) eingelassen ist, und daß die Ausnehmung (9) von in dem Zylinderkopf (1) und in dem Nockenwellenlagerrahmen (5a, 5b, 5c) angeordneten Schmierölräumen (20a, 20c) und Kühlmittelräumen (20b) getrennt ist.

2. Brennkraftmaschine nach Anspruch 1,
**dadurch gekennzeichnet, dass** in den Zylinderkopf (1) und in den Nockenwellenlagerrahmen (5a, 5b, 5c) eine Zweitausnehmung (14) für einen Glühstift (15) je Zylinder eingelassen ist.

3. Brennkraftmaschine nach einem der Ansprüche 1 oder 2,
**dadurch gekennzeichnet, dass** die Ausnehmung und die Zweitausnehmung (14) nebeneinanderliegend in einen gemeinsamen oberen Montageraum (17) in dem Nockenwellenlagerrahmen (5a, 5b, 5c) einmünden.

4. Brennkraftmaschine nach Anspruch 3,
**dadurch gekennzeichnet, dass** der Montageraum (17) sich über die Zylinderreihe der Brennkraftmaschine im Nockenwellenlagerrahmen (5a, 5b, 5c) erstreckt.

5. Brennkraftmaschine nach Anspruch 3 oder 4,
**dadurch gekennzeichnet, dass** in den Montageraum (17) je zugeordnetem Zylinder eine Öffnung (31) in Höhe des Einspritzventilhochdruck-Anschlusses (13) einmündet, die sich zu einer Seitenwand des Nockenwellenlagerrahmens (5a, 5b, 5c) erstreckt.

6. Brennkraftmaschine nach einem der vorherigen Ansprüche,
**dadurch gekennzeichnet, dass** die Ausnehmung (9) und/oder die Zweitausnehmung (14) eine seitliche Entsorgungsöffnung (19) aufweist.

7. Brennkraftmaschine nach einem der vorherigen Ansprüche,
**dadurch gekennzeichnet, dass** der Nockenwellenlagerrahmen (5a, 5b, 5c) die Abdeckung (28) einer Luftansaugleitung (26) bildet.

8. Brennkraftmaschine nach einem der vorherigen Ansprüche,
**dadurch gekennzeichnet, dass** in den Nockenwellenlagerrahmen (5a, 5b, 5c) ein Beruhigungsraum für Blow-By-Gase integriert ist.

9. Brennkraftmaschine nach einem der vorherigen Ansprüche,
**dadurch gekennzeichnet, dass** stirnseitig an den Nockenwellenlagerrahmen (5a, 5b, 5c) ein Zahnräderraum (33) angeformt ist, in den die Nockenwellenzahnräder (37) der Nockenwellen (24a, 24b) angeordnet sind.

10. Brennkraftmaschine nach einem der vorherigen Ansprüche,
**dadurch gekennzeichnet, dass** der Nockenwellenlagerrahmen (5a, 5b, 5c) eine integrierte Deckelplatte (21) aufweist, die von dem Montageraum (17) durchbrochen ist und die Öffnungen (22) für Zylinderkopfschrauben (2) und für Nockenwellenlagerrahmen-Befestigungsschrauben (6) aufweist.

11. Brennkraftmaschine nach einem der Ansprüche 1 bis 9,
**dadurch gekennzeichnet, dass** der Nockenwellenlagerrahmen (5a, 5b, 5c) von einem separaten Deckel (7) abdeckbar ist, wobei der Deckel (7) im Bereich des Montageraums (17) durchbrochen ist.

12. Brennkraftmaschine nach Anspruch 10 oder 11,
**dadurch gekennzeichnet, dass** der Deckel (7) und /oder die Deckelplatte (21) im Bereich des Durchbruchs für den Montageraum (17) von einem Montageraumverschlussdeckel (8) abdeckbar ist.

13. Brennkraftmaschine nach einem der vorherigen Ansprüche,
**dadurch gekennzeichnet, dass** die Nockenwellen (24a, 24b) im Schaftbereich Abflachungen (40) aufweisen, wobei die Nockenwellen (24a, 24b) zum Einführen der Zylinderkopfschrauben (2) und/oder des Schraubwerkzeuges in eine Montagestellung verdrehbar sind.

14. Brennkraftmaschine nach einem der vorherigen Ansprüche,
**dadurch gekennzeichnet, dass** der Nockenwellenlagerrahmen (5a, 5b, 5c) zylinderkopfseitig Dichtnutbereiche aufweist, in die Gummiformdichtungen und/oder Dichtleisten (32) einsetzbar sind.

15. Brennkraftmaschine nach einem der vorherigen Ansprüche,
**dadurch gekennzeichnet, dass** der Nockenwellenlagerrahmen (5a, 5b, 5c) endseitig zu und zwischen den Zylindern Nockenwellentagerstellen für jede Nockenwelle (24a, 24b) aufweist.

16. Brennkraftmaschine nach einem der vorherigen Ansprüche,
**dadurch gekennzeichnet, dass** in dem Zahnräderraum (33) des Nockenwellenlagerrahmen (5a, 5b, 5c) Axiallagerflächen vorgesehen sind, an die die Nockenwellenzahnräder (37) anliegen.

17. Brennkraftmaschine nach einem der vorherigen Ansprüche,
**dadurch gekennzeichnet, dass** der Nockenwellenlagerrahmen (5a, 5b, 5c) gegossene Tassenstößelüberprüfungsöffnungen aufweist.

18. Brennkraftmaschine nach einem der vorherigen Ansprüche,
**dadurch gekennzeichnet, dass** der Nockenwellenlagerrahmen (5a, 5b, 5c) Anschraubsättel für einen Common-Rail-Speicher aufweist.

19. Brennkraftmaschine nach einem der vorherigen Ansprüche,
**dadurch gekennzeichnet, dass** der Nockenwellenlagerrahmen (5a, 5b, 5c) druckgießbar ist.

20. Brennkraftmaschine nach einem der vorherigen Ansprüche,
**dadurch gekennzeichnet, dass** der Nockenwellenlagerrahmen (5a, 5b, 5c) angegossene Haltevorrichtungen zum Einklippen von Schlauchleitungen und elektrischen Kabeln besitzt.

21. Verfahren zum Montieren einer Brennkraftmaschine mit einem Kurbelgehäuse, in dem eine Kurbelwelle drehbar gelagert ist, an der zumindest ein einen Kolben tragendes Pleuel angelenkt ist, das in einem von einem Zylinderkopf abgedeckten Zylinder bewegbar ist, wobei in dem Zylinderkopf Gaswechselventile angeordnet sind, die von zumindest einer obenliegenden im Bereich eines Nockenwellenlagerrahmens drehbar gelagerten Nockenwelle betätigt werden,
**dadurch gekennzeichnet, dass**:
I. der Zylinderkopf (1) vormontiert wird,
II. die Nockenwellen (24a, 24b) in die Nockenwellenlagerstellen des Zylinderkopfs (1) eingesetzt werden,
III. der Nockenwellenlagerrahmen (5a, 5b, 5c) auf den Zylinderkopf (1) aufgesetzt wird und mit den Nockenwellenlagerrahmen-Befestigungsschrauben (6) auf dem Zylinderkopf (1) festgeschraubt wird und
IV. der Zylinderkopf (1) mit montiertem Nockenwellenlagerrahmen (5a, 5b, 5c) sowie ggf. montierten Einspritzventilen (10) und Glühstiften (15) auf das Kurbelgehäuse aufgesetzt und mit Zylinderkopfschrauben (2) befestigt wird.

## Claims

1. Internal combustion engine with a crankcase, rotatably mounted in which is a crankshaft, pivotally attached to which is at least one connecting rod, which carries a piston and which can be moved in a cylinder covered by a cylinder head, engine valves, which are actuated by at least one overhead camshaft rotatably mounted in the region of a camshaft bearing frame, being arranged in the cylinder head, the camshaft bearing frame having a parting plane with respect to the cylinder head which extends through the camshaft axis, **characterized in that** the camshaft bearing frame (5a, 5b, 5c) has an aperture (9) to accommodate one injection valve (10) or one injector per cylinder, and **in that** the aperture (9) is let into the cylinder head (1) and into the camshaft bearing frame (5a, 5b, 5c) as an extension of the cylinder centre line, and **in that** the aperture (9) is separated from lubricating-oil spaces (20a, 20c) and coolant spaces (20b) arranged in the cylinder head (1) and in the camshaft bearing frame (5a, 5b, 5c).

2. Internal combustion engine according to Claim 1, **characterized in that** a second aperture (14) for one glow plug (15) per cylinder is let into the cylinder head (1) and into the camshaft bearing frame (5a, 5b, 5c).

3. Internal combustion engine according to either of Claims 1 and 2, **characterized in that** the aperture and the second aperture (14) open adjacently into a common upper installation space (17) in the camshaft bearing frame (5a, 5b, 5c).

4. Internal combustion engine according to Claim 3, **characterized in that** the installation space (17) extends in the camshaft bearing frame (5a, 5b, 5c) across the row of cylinders of the internal combustion engine.

5. Internal combustion engine according to Claim 3 or 4, **characterized in that** one opening (31) per associated cylinder opens into the installation space (17) at the level of the injection-valve high-pressure connection (13) and extends into a side wall of the camshaft bearing frame (5a, 5b, 5c).

6. Internal combustion engine according to one of the preceding claims, **characterized in that** the aperture (9) and/or the second aperture (14) have/has a lateral disposal opening (19).

7. Internal combustion engine according to one of the preceding claims, **characterized in that** the camshaft bearing frame (5a, 5b, 5c) forms the cover (28) of an air intake line (26).

8. Internal combustion engine according to one of the preceding claims, **characterized in that** a calming space for blow-by gases is integrated into the camshaft bearing frame (5a, 5b, 5c).

9. Internal combustion engine according to one of the preceding claims, **characterized in that** a gearwheel space (33), in which the camshaft gearwheels (37) of the camshafts (24a, 24b) are arranged, is formed at the end of the camshaft bearing frame (5a, 5b, 5c).

10. Internal combustion engine according to one of the preceding claims, **characterized in that** the camshaft bearing frame (5a, 5b, 5c) has an integrated cover plate (21), which is pierced by the installation space (17) and has openings (22) for cylinder head bolts (2) and for camshaft-bearing-frame fastening bolts (6).

11. Internal combustion engine according to one of Claims 1 to 9, **characterized in that** the camshaft bearing frame (5a, 5b, 5c) can be covered by a separate cover (7), the cover (7) being pierced in the region of the installation space (17).

12. Internal combustion engine according to Claim 10 or 11, **characterized in that** the cover (7) and/or the cover plate (21) can be covered by an installation-space closing cover (8) in the region of the penetration for the installation space (17).

13. Internal combustion engine according to one of the preceding claims, **characterized in that**, in the stem region, the camshafts (24a, 24b) have flats (14), the camshafts (24a, 24b) being rotatable into an assembly position for the introduction of the cylinder head bolts (2) and/or the screwing tool.

14. Internal combustion engine according to one of the preceding claims, **characterized in that**, on the cylinder-head side, the camshaft bearing frame (5a, 5b, 5c) has sealing-groove regions, into which shaped rubber gaskets and/or sealing strips (32) can be inserted.

15. Internal combustion engine according to one of the preceding claims, **characterized in that** the camshaft bearing frame (5a, 5b, 5c) has camshaft bearing locations for each camshaft (24a, 24b) at the ends of and between the cylinders.

16. Internal combustion engine according to one of the preceding claims, **characterized in that** thrust-bearing surfaces, against which the camshaft gearwheels (37) rest, are provided in the gearwheel space (33) of the camshaft bearing frame (5a, 5b, 5c).

17. Internal combustion engine according to one of the preceding claims, **characterized in that** the camshaft bearing frame (5a, 5b, 5c) has cast bucket-tappet inspection openings.

18. Internal combustion engine according to one of the preceding claims, **characterized in that** the camshaft bearing frame (5a, 5b, 5c) has bolt-on saddles for a common-rail reservoir.

19. Internal combustion engine according to one of the preceding claims, **characterized in that** the camshaft bearing frame (5a, 5b, 5c) can be die-cast.

20. Internal combustion engine according to one of the preceding claims, **characterized in that** the camshaft bearing frame (5a, 5b, 5c) has cast-on holding devices for clipping in hose lines and electric cables.

21. Method for fitting an internal combustion engine with a crankcase, in which a crankshaft is rotatably mounted, and to which at least one connecting rod is pivotally attached, and which can be moved in a cylinder covered by a cylinder head, engine valves, which are actuated by at least one overhead camshaft rotatably mounted in the region of a camshaft bearing frame, being arranged in the cylinder head, **characterized in that**
I. the cylinder head (1) is preassembled,
II. the camshafts (24a, 24b) are inserted into the camshaft bearing locations of the cylinder head (1),
III. the camshaft bearing frame (5a, 5b, 5c) is placed on the cylinder head (1) and is screwed firmly onto the cylinder head (1) with the camshaft-bearing-frame fastening bolts (6), and
IV. the cylinder head (1) with the camshaft bearing frame (5a, 5b, 5c) fitted and, if appropriate, with the injection valves (10) and glow plugs (15) fitted is placed on the crankcase and fastened with cylinder-head bolts (2).

## Revendications

1. Moteur à combustion interne avec un carter moteur, dans lequel est monté rotatif un vilebrequin, sur lequel est articulée au moins une bielle portant un piston qui peut se déplacer dans un cylindre recouvert par une culasse de cylindre, des soupapes d'échange gazeux étant disposées dans la culasse de cylindre, lesquelles sont actionnées par au moins un arbre à cames monté rotatif situé en haut dans la région d'un cadre de support pour arbre à cames, le cadre de support pour arbre à cames présentant un plan de séparation par rapport à la culasse de cylindre s'étendant à travers l'axe de l'arbre à cames,
**caractérisé en ce que** le cadre de support pour arbre à cames (5a, 5b, 5c) présente un évidement (9) pour recevoir une soupape d'injection (10) ou un injecteur par cylindre, et **en ce que** l'évidement (9) est introduit dans le prolongement de l'axe médian du cylindre dans la culasse de cylindre (1) et dans le cadre de support pour arbre à cames (5a, 5b, 5c), et **en ce que** l'évidement (9) est séparé de chambres d'huile lubrifiante (20a, 20c) et de chambres de fluide de refroidissement (20b) prévues dans la culasse de cylindre (1) et dans le cadre de support pour arbre à cames (5a, 5b, 5c).

2. Moteur à combustion interne selon la revendication 1,
**caractérisé en ce qu'**un deuxième évidement (14) pour un crayon de préchauffage (15) est introduit pour chaque cylindre dans la culasse de cylindre (1) et dans le cadre de support pour arbre à cames (5a, 5b, 5c).

3. Moteur à combustion interne selon l'une quelconque des revendications 1 ou 2,
**caractérisé en ce que** l'évidement et le deuxième évidement (14) débouchent l'un à côté de l'autre dans un espace de montage supérieur commun (17) dans le cadre de support pour arbre à cames (5a, 5b, 5c).

4. Moteur à combustion interne selon la revendication 3,
**caractérisé en ce que** l'espace de montage (17) s'étend sur la rangée de cylindres du moteur à combustion interne dans le cadre de support pour arbre à cames (5a, 5b, 5c).

5. Moteur à combustion interne selon la revendication 3 ou 4,
**caractérisé en ce qu'**une ouverture (31) pour chaque cylindre associé débouche à la hauteur du raccord haute pression de la soupape d'injection (13) dans l'espace de montage (17), cette ouverture s'étendant vers une paroi latérale du cadre de support pour arbre à cames (5a, 5b, 5c).

6. Moteur à combustion interne selon l'une quelconque des revendications précédentes,
**caractérisé en ce que** l'évidement (9) et/ou le deuxième évidement (14) présentent une ouverture d'évacuation latérale (19).

7. Moteur à combustion interne selon l'une quelconque des revendications précédentes,
**caractérisé en ce que** le cadre de support pour arbre à cames (5a, 5b, 5c) forme le recouvrement (28) d'une conduite d'aspiration d'air (26).

8. Moteur à combustion interne selon l'une quelconque des revendications précédentes,
**caractérisé en ce qu'**un espace de stabilisation pour les gaz contournant le piston est intégré dans le cadre de support pour arbre à cames (5a, 5b, 5c).

9. Moteur à combustion interne selon l'une quelconque des revendications précédentes,
**caractérisé en ce que**, du côté frontal sur le cadre de support pour arbre à cames (5a, 5b, 5c) est formé un espace pour roues dentées (33), dans lequel sont disposées les roues dentées (37) de l'arbre à cames (24a, 24b).

10. Moteur à combustion interne selon l'une quelconque des revendications précédentes,
**caractérisé en ce que** le cadre de support pour arbre à cames (5a, 5b, 5c) présente une plaque de recouvrement intégrée (21), qui est interrompue par l'espace de montage (17) et qui présente des ouvertures (22) pour des vis (2) pour la culasse de cylindre et pour des vis de fixation (6) du cadre de support pour arbre à cames.

11. Moteur à combustion interne selon l'une quelconque des revendications 1 à 9,
**caractérisé en ce que** le cadre de support pour arbre à cames (5a, 5b, 5c) peut être recouvert par un couvercle séparé (7), le couvercle (7) étant interrompu dans la région de l'espace de montage (17).

12. Moteur à combustion interne selon la revendication 10 ou 11,
**caractérisé en ce que** le couvercle (7) et/ou la plaque de recouvrement (21) peuvent être recouverts dans la région de l'interruption pour l'espace de montage (17) par un couvercle de fermeture (8) de l'espace de montage.

13. Moteur à combustion interne selon l'une quelconque des revendications précédentes,
**caractérisé en ce que** les arbres à cames (24a, 24b) présentent, dans la région de la tige, des méplats (40), les arbres à cames (24a, 24b) pouvant tourner pour l'insertion des vis (2) pour la culasse de cylindre et/ou du tournevis dans une position de montage.

14. Moteur à combustion interne selon l'une quelconque des revendications précédentes,
**caractérisé en ce que** le cadre de support pour arbre à cames (5a, 5b, 5c) présente, du côté de la culasse de cylindre, des zones de rainures d'étanchéité, dans lesquelles des joints moulés en caoutchouc et/ou des nervures d'étanchéité (32) peuvent être insérés.

15. Moteur à combustion interne selon l'une quelconque des revendications précédentes,
**caractérisé en ce que** le cadre de support pour arbre à cames (5a, 5b, 5c) présente, du côté terminal vers et entre les cylindres, des points d'appui pour arbre à cames pour chaque arbre à cames (24a, 24b).

16. Moteur à combustion interne selon l'une quelconque des revendications précédentes,
**caractérisé en ce que** dans l'espace pour roues dentées (33) du cadre de support pour arbre à cames (5a, 5b, 5c) sont prévues des surfaces de support axiales contre lesquelles s'appliquent les roues dentées pour arbre à cames (37).

17. Moteur à combustion interne selon l'une quelconque des revendications précédentes,
**caractérisé en ce que** le cadre de support pour arbre à cames (5a, 5b, 5c) présente des ouvertures coulées de surveillance du poussoir à coupelle.

18. Moteur à combustion interne selon l'une quelconque des revendications précédentes,
**caractérisé en ce que** le cadre de support pour arbre à cames (5a, 5b, 5c) présente des sièges à visser pour un accumulateur à rampe commune.

19. Moteur à combustion interne selon l'une quelconque des revendications précédentes,
**caractérisé en ce que** le cadre de support pour arbre à cames (5a, 5b, 5c) peut être moulé sous pression.

20. Moteur à combustion interne selon l'une quelconque des revendications précédentes,
**caractérisé en ce que** le cadre de support pour arbre à cames (5a, 5b, 5c) possède des dispositifs de fixation moulés destinés à l'enclipsage de conduites en tuyaux souples et de câbles électriques.

21. Procédé de montage d'un moteur à combustion interne comprenant un carter moteur, dans lequel est monté rotatif un vilebrequin, sur lequel est articulée au moins une bielle portant un piston qui peut se déplacer dans un cylindre recouvert par une culasse de cylindre, des soupapes d'échange gazeux étant disposées dans la culasse de cylindre, lesquelles sont actionnées par au moins un arbre à cames monté rotatif situé en haut dans la région d'un cadre de support pour arbre à cames,
**caractérisé en ce que** :
I. la culasse de cylindre (1) est pré-montée,
II. les arbres à cames (24a, 24b) sont insérés dans les points d'appui pour arbre à cames de la culasse de cylindre (1),
III. le cadre de support pour arbre à camés (5a, 5b, 5c) est placé sur la culasse de cylindre (1) et est vissé fermement sur la culasse de cylindre (1) avec les vis de fixation (6) pour le cadre de support pour arbre à cames et
IV. la culasse de cylindre (1) est placée avec le cadre de support pour arbre à cames (5a, 5b, 5c) ainsi qu'éventuellement des soupapes d'injection montées (10) et des crayons de préchauffage (15) sur le carter moteur, et est fixée avec des vis (2) pour la culasse de cylindre.
